# FASCICULE DE BREVET EUROPEEN

(11) **EP 1 885 594 B1**
(45) Date de publication et mention de la délivrance du brevet: **22.10.2008**
(21) Numéro de dépôt: 06764716.4
(22) Date de dépôt: 01.06.2006
(51) Int. Cl.: B62D 9/02

(54) **VEHICULE ROUTIER A HABITACLE PENDULAIRE**
STRASSENFAHRZEUG MIT PENDELFAHRGASTZELLE
PENDULUM COMPARTMENT ROAD VEHICLE

(30) Priorité: 01.06.2005 FR 0505568
(43) Date de publication de la demande: 13.02.2008
(73) Titulaire: Mecanroc, 26780 Allan (FR)
(72) Inventeur: RAMBAUD, Pascal, F-26780 Allan (FR)
(74) Mandataire: Maureau, Philippe
(86) Numéro de dépôt international: PCT/FR2006/001248
(87) Numéro de publication internationale: WO 2006/129020

(56) Documents cités:
- DE-B- 1 214 100
- GB-A- 2 279 047

## Description

La présente invention concerne un véhicule routier à habitacle pendulaire.

La plupart des véhicules terrestres à quatre roues connus comprennent un habitacle solidaire d'un châssis monté sur des trains roulants avec interposition d'éléments de suspension.

Généralement, le plan des roues reste sensiblement perpendiculaire au sol en ligne droite et en virage. En conséquence, la force centrifuge générée dans les virages impose des contraintes latérales que subissent d'une part la structure et les trains roulants, d'autre part le conducteur et les passagers.

S'ils bénéficient d'une bonne stabilité statique, ces véhicules à quatre roues ont dû s'adapter aux contraintes dynamiques résultant de l'amélioration des performances et notamment de la vitesse en virage, permise par l'augmentation de l'adhérence des pneumatiques : abaissement du centre de gravité et élargissement de la voie ; amélioration de la résistance à la torsion des composants sollicités par la force centrifuge (châssis, essieux ou bras de suspension, moyeux, roulements, roues, pneumatiques).

Cette adaptation aux contraintes de la force centrifuge s'est traduite par un très fort surdimensionnement des pièces précitées par rapport aux besoins « en ligne droite » où les sollicitations s'exercent dans le seul plan vertical.

L'augmentation de la résistance aux contraintes latérales a eu pour effet d'augmenter sensiblement le poids des véhicules et la surface de contact des pneus avec le sol, qui sont deux facteurs importants d'accroissement des besoins en énergie et donc de consommation.

Par ailleurs, les véhicules à deux roues n'ont aucune stabilité statique mais bénéficient d'un équilibre dynamique tant en ligne droite qu'en virage. L'équilibre en virage réclame une action cérébrale et motrice du conducteur pour obtenir que la résultante des forces appliquées (poids et force centrifuge) soit coplanaire avec le plan défini par les points d'appui au sol et le centre de gravité. Cet équilibre parfait exclut toutes les contraintes de torsion propres aux véhicules à quatre roues et favorise la conception de véhicules très légers. Toutefois, cet équilibre est fragile et peut être brutalement, irréversiblement et dangereusement rompu par une brève perte d'adhérence des pneumatiques.

Les inconvénients propres aux quatre roues et aux deux roues ont depuis longtemps incité les concepteurs à rechercher des solutions permettant de concilier les avantages propres à chaque concept, généralement en associant une capacité d'inclinaison et une autostabilité. On peut ainsi citer :
- les tricycles articulés qui sont des véhicules hybrides équipés d'une roue avant inclinable empruntée à la moto et d'un train arrière d'automobile ;
- les chemins de fer pendulaires dont les rames s'inclinent par rapport au plan des boggies d'un angle calculé en fonction du rayon de la courbe (connu à l'avance) et de la vitesse ;
- différents prototypes d'automobile dont les roues peuvent s'incliner en virage, soit proportionnellement au braquage des roues, soit en réponse aux ordres d'un ordinateur analysant les accélérations et l'action sur les commandes.

Ces véhicules peuvent apporter des améliorations de comportement dynamique mais conservent au moins l'un des inconvénients suivants :
- pas d'inclinaison proportionnellement à la force centrifuge ;
- inclinaison uniquement du châssis et non des roues (train pendulaire) ;
- inclinaison uniquement des roues et non du châssis ;
- nécessité de recourir à des commandes programmées qui supposent que soit connu à l'avance le rayon du virage (train pendulaire),
- nécessité de recourir à des automatismes programmés en fonction de l'analyse du comportement et de l'action sur les commandes.

Ainsi, aucun de ces véhicules n'est apte à trouver, automatiquement et sans recours à l'électronique, un équilibre dynamique parfait en virage comme celui d'un vélo ou d'une moto, tout en conservant une autostabilité sécurisante, notamment en cas de perte d'adhérence.

Le document DE1214100 qui est considéré comme l'état de la technique expose les caractéristiques techniques du préambule de la revendication 1.

L'invention vise à proposer un véhicule à quatre roues apte à remédier aux inconvénients mentionnés ci-dessus.

A cet effet, le véhicule selon l'invention comprend :
- un châssis ;
- au moins un train de roue avant et un train de roue arrière, l'un des deux trains comprenant au moins deux roues et l'autre au moins une roue, la ou les roues d'au moins l'un des trains étant directrices, chacune des roues directrices étant montée sur le châssis par l'intermédiaire d'un premier pivot, dit pivot de direction, pour pouvoir être braquée ;
- un habitacle destiné à recevoir le conducteur et les passagers du véhicule ;
- un volant de direction monté sur l'habitacle, apte à provoquer le braquage des roues directrices par l'intermédiaire de moyens de transmission.

Le véhicule est plus particulièrement caractérisé :
- en ce que l'habitacle est monté pivotant par rapport au châssis autour d'un axe longitudinal situé sensiblement dans le plan longitudinal médian du véhicule, au-dessus du centre de gravité de l'habitacle ;
- et en ce que chacune des roues est montée sur le châssis par l'intermédiaire d'un deuxième pivot, dit pivot d'inclinaison, l'axe dudit pivot d'inclinaison s'étendant dans un plan sensiblement parallèle au plan longitudinal médian du véhicule en étant incliné vers le bas d'un angle compris entre 5 et 45°, par rapport à l'axe longitudinal du véhicule, lorsque l'on se rapproche du point de contact entre la roue et le sol ;
la géométrie du véhicule et/ou des moyens mécaniques associant l'habitacle et les roues étant aptes à provoquer, lorsque le véhicule circule dans un virage, un pivotement de l'habitacle et une inclinaison de chacune des roues vers l'intérieur du virage, sous l'effet de la force centrifuge, le châssis restant sensiblement parallèle au sol.

L'invention fournit ainsi un véhicule terrestre à quatre roues directrices et inclinables, parfaitement et automatiquement équilibré en virage sans le recours à des assistances électroniques, dans lequel :
- les quatre roues s'inclinent en virage vers l'intérieur sous le seul effet de la force centrifuge et proportionnellement à elle, de sorte que la résultante des forces appliquées à la roue et au pneumatique se trouve dans le plan de la roue et ne génère aucun moment de torsion ou de flexion latérale ;
- l'habitacle s'incline en virage vers l'intérieur sous le seul effet de la force centrifuge et proportionnellement à elle, de sorte que les occupants ne ressentent aucune accélération latérale et que l'habitacle ne subit aucun moment de torsion.

L'invention permet ainsi, notamment, d'améliorer le confort et la sensation d'équilibre des occupants du véhicule, d'alléger les composants du châssis et des trains roulants, de réduire les surfaces d'appui au sol et les frottements correspondants, de diminuer les coûts de fabrication et de réaliser des économies d'énergie motrice.

Selon un premier mode de réalisation, chacune des roues est reliée à l'habitacle par une biellette d'inclinaison agencée pour que le pivotement de l'habitacle entraîne l'inclinaison des roues, et le pivot d'inclinaison d'une roue est disposé de sorte que le point d'intersection entre son axe et le sol soit sensiblement confondu avec le point de contact entre ladite roue et le sol. Dans ce cas, l'inclinaison des roues en virage est provoquée par le pivotement de l'habitacle via les biellettes, la géométrie des roues étant telle qu'elle ne s'oppose pas à cette inclinaison.

Selon un deuxième mode de réalisation, le pivot d'inclinaison d'une roue est disposé de sorte que le point d'intersection entre son axe et la perpendiculaire au sol passant par le point de contact entre ladite roue et le sol soit situé sous ledit point de contact entre la roue et le sol. Dans ce cas, d'une part l'habitacle pivote par effet de pendule et, d'autre part, les roues s'inclinent du fait du moment que possède la réaction du sol par rapport à l'axe du pivot d'inclinaison.

Ces deux mouvements peuvent être indépendants l'un de l'autre. En variante, chacune des roues est reliée à l'habitacle par une biellette d'inclinaison apte à transmettre l'inclinaison des roues à l'habitacle. L'habitacle pivote autour de son axe, à la fois par l'effet pendulaire mais également parce qu'il est entraîné par les roues.

Par exemple, le pivot d'inclinaison est situé à l'extérieur de l'empattement et la longueur et la position des biellettes d'inclinaison sont prévues pour que le sous-braquage induit par l'inclinaison du pivot d'inclinaison par rapport à l'axe longitudinal du véhicule soit sensiblement exactement compensé par le sur-braquage induit par le pivotement de l'habitacle.

L'expression « à l'extérieur de l'empattement » signifie que le pivot d'inclinaison est situé devant les roues avant et derrière les roues arrière. Cette configuration permet que seul un mouvement relatif du volant par rapport à l'habitacle produise un braquage effectif.

A l'inverse, le pivot d'inclinaison peut être situé à l'intérieur de l'empattement. Dans ce cas, les biellettes d'inclinaison sont positionnées différemment par rapport au cas précédent. La longueur et la position des biellettes d'inclinaison permettent que le sur-braquage induit par l'inclinaison du pivot d'inclinaison par rapport à l'axe longitudinal du véhicule soit sensiblement exactement compensé par le sous-braquage induit par le pivotement de l'habitacle.

Par exemple, les pivots de direction et d'inclinaison sont disposés successivement entre le châssis et le moyeu de chacune des roues directrices, lesdits pivots étant reliés par un bras auquel sont associés les moyens de transmission. Le pivot de direction est alors de préférence situé entre le pivot d'inclinaison et le châssis.

En variante, les pivots de direction et d'inclinaison sont disposés de sorte que leurs axes soient situés sensiblement dans le plan de la roue. Selon une première variante, les axes des pivots sont contigus mais décalés. Selon une deuxième variante, les axes des pivots sont sécants (principe de cardan), ce qui impose une orthogonalité des axes. Selon une troisième variante, les deux axes sont réalisés à partir d'une liaison de type rotule. Au moins une roue peut ainsi être associée au châssis au moyen d'un cardan ou d'une rotule.

Selon une réalisation possible, l'angle (α) d'inclinaison de l'axe du pivot d'inclinaison est compris entre 15 et 30°.

En outre, les moyens de transmission peuvent comprendre une colonne de direction dont l'extrémité arrière porte le volant et dont l'extrémité avant est associée, par l'intermédiaire de moyens démultiplicateurs, à deux biellettes de direction, chacune des biellettes de direction étant reliée à une roue directrice d'un même train de roues, avant ou arrière.

Par exemple, toutes les roues sont directrices, et le véhicule comprend un arbre longitudinal, monté sur l'habitacle, apte à transmettre la commande fournie par le volant d'un premier train de roues à un deuxième train de roues.

L'habitacle peut être cylindrique, pour que le véhicule présente une garde au sol constante, tant en ligne droite que dans les virages.

Selon une réalisation possible, l'axe longitudinal de rotation de l'habitacle passe par le centre géométrique de l'habitacle.

Enfin, le châssis peut être placé à l'extérieur de l'habitacle.

On décrit à présent, à titre d'exemple non limitatif, une forme de réalisation possible de l'invention, en référence aux figures annexées :
La figure 1 est une vue en perspective simplifiée d'un véhicule selon un premier mode de réalisation de l'invention, lorsqu'il est à l'arrêt ou qu'il se déplace en ligne droite, seules les roues avant ayant été représentées ;
La figure 2 est une vue de face du véhicule de la figure 1 ;
Les figures 3 et 4 sont des vues de la partie avant du véhicule de la figure 1, respectivement de dessus et de côté ;
Les figures 5 et 6 sont des vues en perspective respectivement de la partie avant et de la partie arrière du véhicule de la figure 1, montrant les moyens de transmission de la commande de direction aux roues arrière ;
Les figures 7, 8, 9 et 10 sont des vues similaires respectivement aux figures 1, 2, 3 et 4 lorsque le véhicule se déplace sur une courbe orientée vers la droite ;
Les figures 11 et 12 sont des vues en perspective simplifiée d'un véhicule selon un deuxième mode de réalisation de l'invention, respectivement lorsqu'il est à l'arrêt ou qu'il se déplace en ligne droite, et lorsqu'il se déplace sur une courbe orientée vers la droite ;
Les figures 13 et 14 sont des vues de détail des roues avant respectivement droite et gauche, du véhicule représenté sur la figure 12 ;
Les figures 15 et 16 sont des vues en perspective simplifiée d'un véhicule selon un troisième mode de réalisation de l'invention, respectivement lorsqu'il est à l'arrêt ou qu'il se déplace en ligne droite, et lorsqu'il se déplace sur une courbe orientée vers la droite ; et
Les figures 17 et 18 sont des vues de détail des roues avant respectivement droite et gauche, du véhicule représenté sur la figure 16.

Pour simplifier, l'invention est ici décrite à partir d'un véhicule de compétition monoplace sans moteur, mû par la force de gravité, mais elle peut bien entendu s'appliquer dans le domaine automobile.

Le véhicule sera décrit dans le cas où il repose sur un sol horizontal. Les termes « avant » et « arrière » s'entendent, le long de la direction longitudinale générale du véhicule (ici horizontale), par rapport au mouvement du véhicule en marche avant. Le terme « transversal » désigne la direction orthogonale à l'axe longitudinal du véhicule, et les termes « intérieur » et « extérieur » sont définis par rapport à un virage dans lequel est engagé le véhicule.

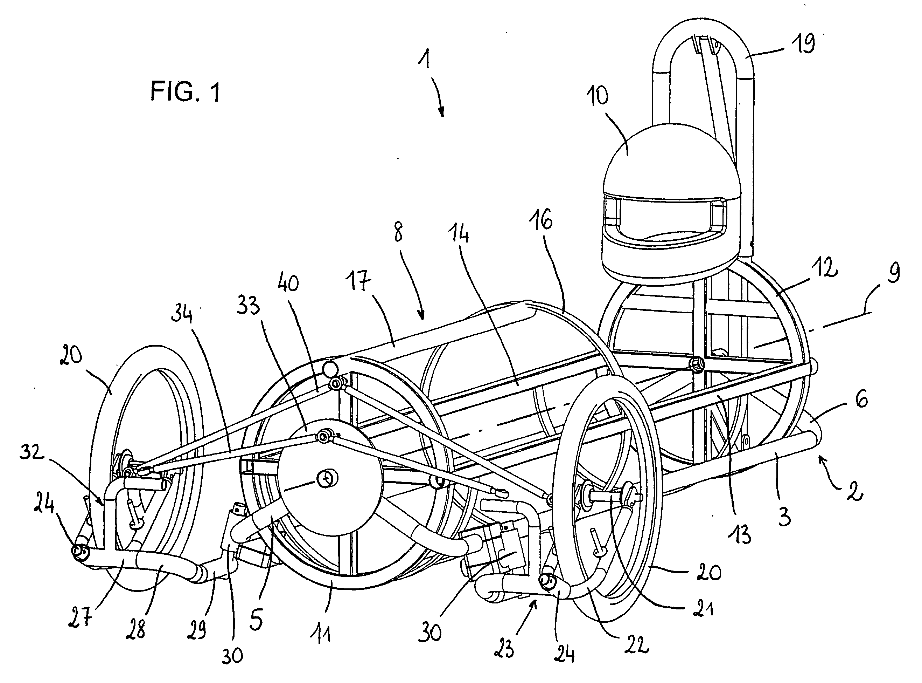

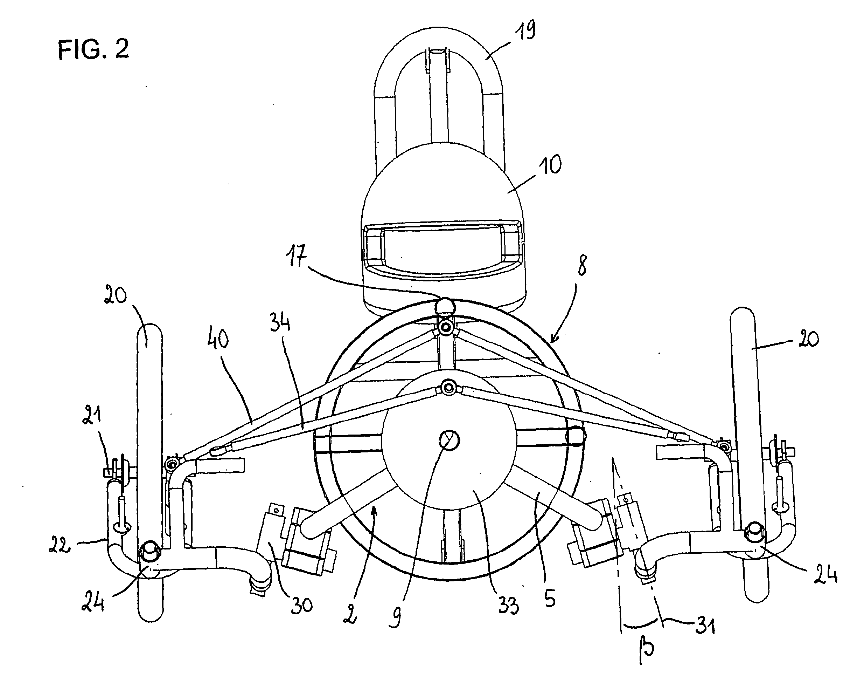

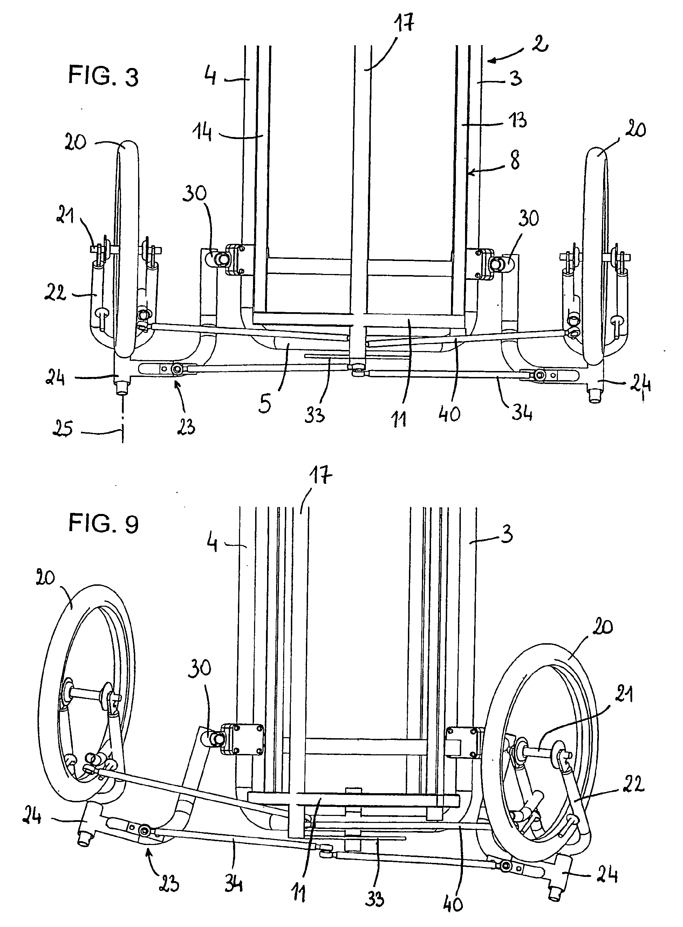

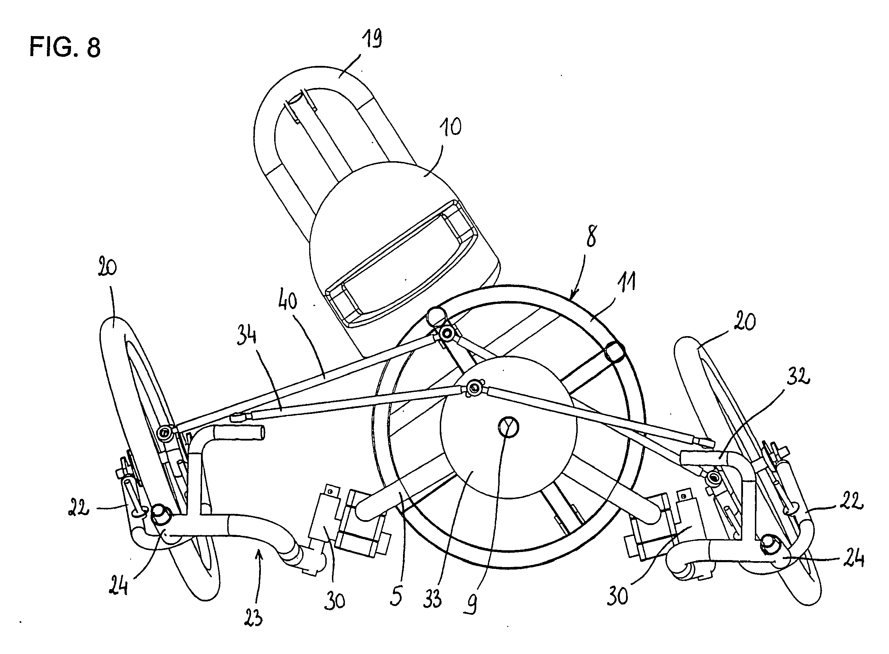

On décrit tout d'abord un premier mode de réalisation du véhicule, en référence aux figures 1 à 10.

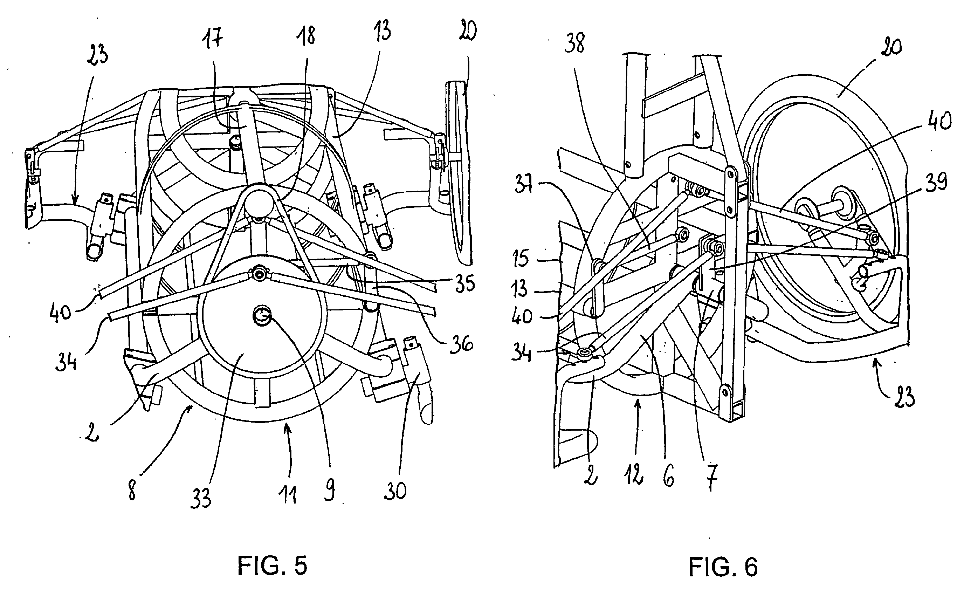

Le véhicule 1 comprend un châssis 2, comprenant deux barres latérales 3, 4 s'étendant longitudinalement à la même hauteur par rapport au sol. Les barres 3, 4 sont reliées entre elles par deux barres en V 5, 6 respectivement avant et arrière, s'étendant dans un plan sensiblement vertical, la pointe du V étant dirigée vers le haut. En outre, une broche 7 longitudinale s'étend vers l'arrière depuis la pointe du V de la barre arrière 6 (voir figure 5).

Le véhicule 1 comprend également un habitacle 8 de forme générale cylindrique, d'axe 9, dans lequel s'installera le conducteur, représenté ici par son seul casque 10. L'habitacle 8 est monté pivotant par rapport au châssis 2 autour de l'axe 9, et son centre de gravité est situé sous l'axe 9. A cet effet, l'habitacle 8 est généralement lesté.

La forme cylindrique de l'habitacle 8 est définie par une pièce avant 11 et une pièce arrière 12 sensiblement identiques et disposées verticalement, constituées chacune d'un élément circulaire d'axe 9 dans lequel s'inscrivent deux barres en croix. A l'arrêt, et en ligne droite, une branche de la croix est horizontale et l'autre verticale. Les pièces avant 11 et arrière 12 sont reliées par deux barreaux latéraux 13, 14 creux et horizontaux, placés à mi hauteur de l'habitacle 8, et par un socle 15 incurvé formant le siège du conducteur. De plus, une pièce intermédiaire 16 annulaire est fixée verticalement entre les barreaux 13, 14 à mi distance entre les pièces avant 11 et arrière 12.

Entre la pièce intermédiaire 16 et la pièce avant 11 s'étend horizontalement et en partie supérieure de l'habitacle 8 un tube 17. Le tube 17 reçoit une colonne de direction (non représentée) dont l'extrémité arrière porte un volant dont l'extrémité avant est ménagée pour coopérer avec une chaîne 18 (voir figure 5). Enfin, l'habitacle 8 comporte un dossier 19 fixé sur la pièce arrière 12.

De plus, le véhicule 1 comprend quatre roues 20, à savoir deux roues avant et deux roues arrière. Pour des raisons de clarté, les roues arrières n'ont été représentées que sur les figures 5 et 6. Le train de roues arrière est symétrique du train de roues avant par rapport au plan transversal médian du véhicule 1. On décrit ci-après une roue avant, sachant que les deux roues d'un même train de roues (avant ou arrière) sont symétriques par rapport au plan longitudinal médian de véhicule 1.

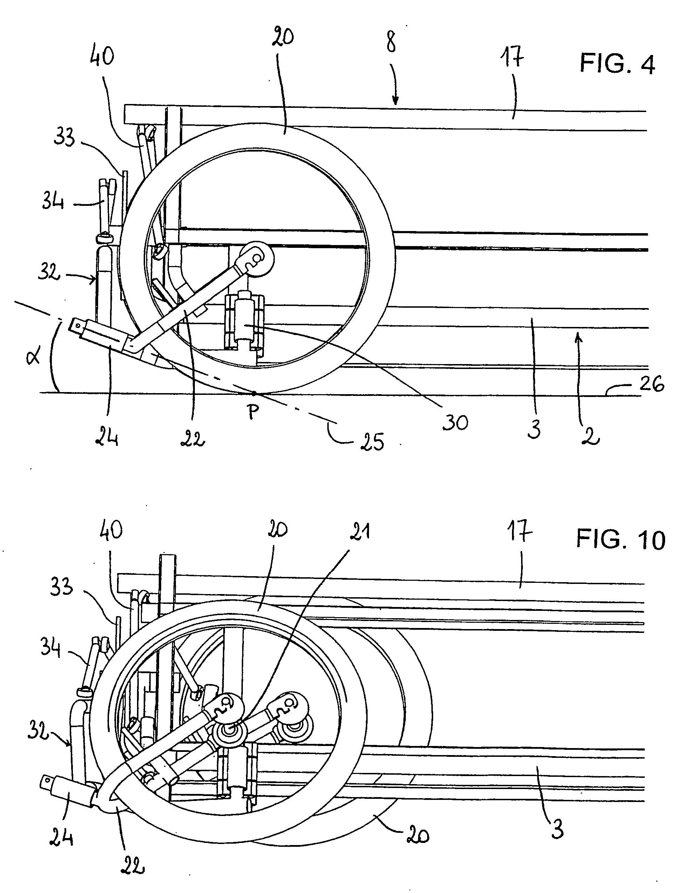

La roue 20 comprend un moyeu 21 associé au châssis 2 par des moyens de liaison. Les moyens de liaison comprend une fourche 22 en U portant à sa partie coudée une tige autour de laquelle est disposée une gaine cylindrique portée par la première extrémité d'un bras 23. Est ainsi formé un pivot d'inclinaison 24 dont l'axe 25 est situé sensiblement dans un plan vertical parallèle à l'axe 9 et incliné vers le haut d'un angle α par rapport à l'axe 9, de l'arrière vers l'avant du véhicule 1. L'angle α est compris entre 15 et 30°, et par exemple de l'ordre de 20°. Dans la réalisation représentée, le point d'intersection entre l'axe 25 et le sol 26 est sensiblement confondu avec le point de contact P entre la roue 20 et le sol 26 (voir figure 4).

Le bras 23 comporte une première portion rectiligne 27 s'étendant sensiblement transversalement et horizontalement depuis le pivot d'inclinaison 24 vers le châssis 2 reliée par une portion coudée 28 à une deuxième portion rectiligne 29 s'étendant sensiblement longitudinalement entre la roue 20 et le châssis 2 jusqu'à la deuxième extrémité du bras 23. Cette deuxième extrémité porte une tige autour de laquelle est disposée une gaine cylindrique fixée sur le châssis 2. Est ainsi formé un pivot de direction 30 dont l'axe 31 est situé dans un plan sensiblement transversal et incliné vers le haut d'un angle β par rapport à l'horizontale, de la roue 20 vers le châssis 2. L'angle β est compris entre 10 et 30°. Cette configuration permet de garantir une bonne stabilité du véhicule 1.

Enfin, le bras 23 comporte une tige 32 s'étendant sensiblement dans un plan transversal depuis la première portion rectiligne 27. La tige 32 est coudée en L et présente une parie verticale dirigée vers le haut, puis une partie horizontale dirigée vers le châssis 2.

La chaîne 18 est placée autour d'une couronne dentée 33 d'axe 9, montée pivotante autour de cet axe 9, formant moyens démultiplicateurs. A l'avant du véhicule 1, et pour chacune des deux roues avant, une biellette de direction 34 est fixée à une première extrémité sur la couronne 33, verticalement au-dessus de l'axe 9 (lorsque le véhicule 1 est à l'arrêt ou en ligne droite) et en avant de celle-ci, et à une deuxième extrémité sur la partie horizontale de la tige 32.

De plus, comme illustré sur les figures 5 et 6, une biellette avant de transmission 35 est fixée à une première extrémité à l'arrière de la couronne dentée 33 et à une deuxième extrémité sur une plaque avant 36, à une extrémité de celle-ci. L'autre extrémité de la plaque avant 36 est solidaire de l'extrémité avant d'un arbre longitudinal monté de façon pivotante dans un barreau latéral 13 de l'habitacle 8. Une plaque arrière 37, solidaire de l'extrémité arrière de l'arbre longitudinal est associée de façon similaire à une biellette arrière de transmission 38. Un élément 39 monté pivotant sur la broche 7 arrière du châssis 2 assure la liaison entre la biellette arrière de transmission 38 et deux biellettes de direction 34, disposées à l'arrière du véhicule 1 et associées chacune à une roue arrière de façon identique à ce qui a été décrit pour les roues avant.

Enfin, quatre biellettes d'inclinaison 40 sont prévues. Chacune est fixée à une première extrémité à l'habitacle 8, sur une branche de la croix de la pièce avant 11 ou arrière 12, verticalement au-dessus de l'axe 9 (lorsque le véhicule 1 est à l'arrêt ou en ligne droite) et à une deuxième extrémité à l'aile de la fourche 22 la plus proche du châssis 2.

La liaison des extrémités des biellettes à la structure correspondante peut se faire par une liaison rotule.

L'autostabilité du véhicule 1 en ligne droite est assurée par l'effet pendulaire de l'habitacle 8 (lesté) et par l'inclinaison d'un angle β des pivots de direction 30.

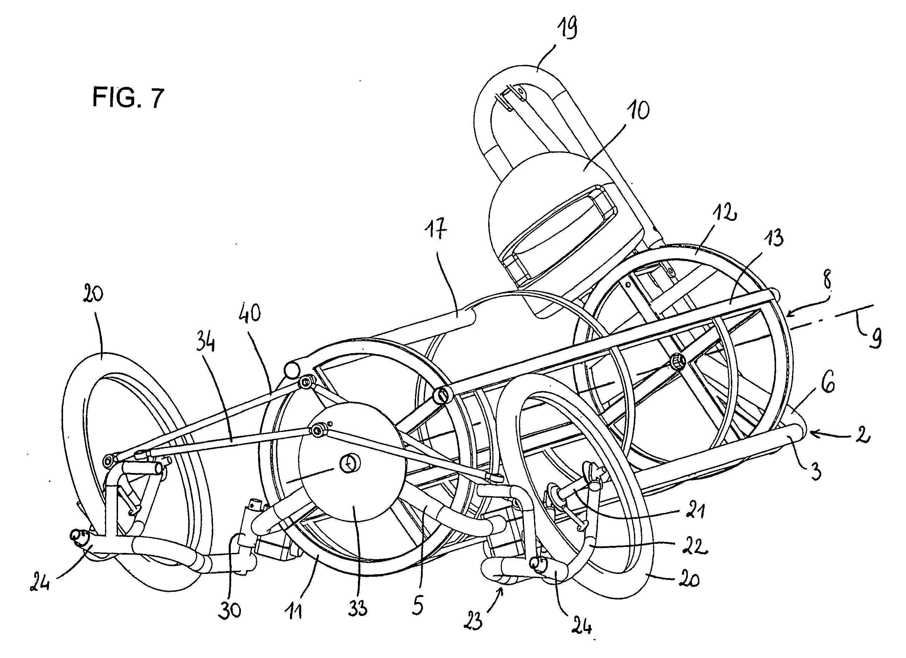

On se réfère à présent aux figures 7 à 10 représentant le véhicule 1 dans un virage (courbe à droite).

Pour prendre ce virage, le conducteur a tourné le volant à droite. Ceci a provoqué d'une part le braquage des roues avant par l'intermédiaire de la chaîne 18, de la roue dentée 33 et des biellettes de direction 34 provoquant le pivotement des roues 20 autour de l'axe 31. D'autre part, les roues arrières pivotent également autour de l'axe 31 de leur pivot de direction 30 par l'intermédiaire de la biellette avant de transmission 35, de la plaque avant 36, de l'arbre de transmission, de la plaque arrière 37, de la biellette arrière de transmission 38 et des deux biellettes de direction 34.

De plus, du fait de la force centrifuge, fonction du rayon du virage et de la vitesse, l'habitacle 8 pivote autour de l'axe 9 vers l'intérieur du virage. Ce pivotement est obtenu par effet de pendule, le centre de gravité de l'habitacle étant situé en dessous de l'axe de rotation 9. En conséquence, par l'intermédiaire des biellettes d'inclinaison 40, les quatre roues 20 s'inclinent également vers l'intérieur du virage, sensiblement du même angle que l'habitacle 8. En revanche, les barres latérales 3, 4 du châssis 2 restent sensiblement parallèles au sol.

Puisque, pour chaque roue, l'intersection de l'axe 25 du pivot d'inclinaison 24 avec le sol est sensiblement confondu avec le point P de contact entre la roue 20 et le sol 26, le moment de réaction du sol sur la roue par rapport à l'axe 25 est nul, et rien ne s'oppose donc à l'inclinaison des roues 20.

L'axe 25 n'étant pas horizontal mais incliné d'un angle α, le pivotement des roues 20 autour de cet axe 25 induit un braquage, qui est ici un sous-braquage puisque le pivot d'inclinaison 24 est situé à l'extérieur de l'empattement des roues (c'est-à-dire devant les roues avant et derrière les roues arrière). Mais ce sous-braquage induit indésirable est exactement compensé par un sur-braquage induit par le pivotement de l'habitacle 8, sans mouvement relatif du volant par rapport à l'habitacle 8. Ce résultat est obtenu grâce aux longueurs appropriées des bras de levier situés en arrière (sur une couronne 33 s'inclinant avec l'habitacle 8 en l'absence de mouvement relatif du volant) et en avant des biellettes de direction 40.

La rotation du volant par rapport à l'habitacle 8 sur lequel il tourne est donc seule génératrice d'un braquage effectif. Les sensations de conduite connues sur une voiture sont ainsi conservées (sensation de braquage par rapport à l'habitacle 8 et non par rapport au sol 26).

Dans une variante non représentée, l'axe 25 du pivot d'inclinaison 24 passe sous le point de contact P entre la roue 20 et le sol 26. Dans ce cas, la composante horizontale de la réaction du sol sur la roue 20 possède, par rapport à l'axe 25, un moment qui provoque l'inclinaison de la roue 20 dans le sens du virage. En conséquence, par l'intermédiaire des biellettes de direction 34, l'inclinaison des roues 20 entraîne le pivotement de l'habitacle 8 (si la positon de son centre de gravité ne s'y oppose pas). Dans cette variante de réalisation, il est possible de supprimer les biellettes d'inclinaison 34. On obtiendrait néanmoins une inclinaison parallèle de l'habitacle 8 et des roues 20 dans le plan de la résultante des forces.

Il existe donc deux moyens complémentaires et associables qui peuvent produire l'inclinaison des roues 20 et de l'habitacle 8 :
- effet de pendule de l'habitacle 8 transmis aux roues par les biellettes d'inclinaison 34, l'inclinaison de l'axe 35 ne s'opposant pas à cette inclinaison ;
- et/ou positionnement de l'axe 35 adapté pour provoquer une inclinaison automatique des roues 20 sous l'effet de la force centrifuge, cette inclinaison pouvant être transmise à l'habitacle 8 par les biellettes d'inclinaison 34 ou non.

Il est à noter que les pivots d'inclinaison 24 et de direction 30 sont indépendants l'un de l'autre dans leurs mouvements.

Sur les figures, le pivot de direction 30 est situé entre le pivot d'inclinaison 24 et le châssis 2. Cette disposition est en effet mieux adaptée à une application avec des composants de cycles et des roues montées sur des fourches.

Toutefois, il est possible de réaliser un montage dans lequel le pivot d'inclinaison 24 serait situé entre le pivot de direction 30 et le châssis 2. Cette disposition est mieux adaptée à une application automobile avec des roues montées sur fusées.

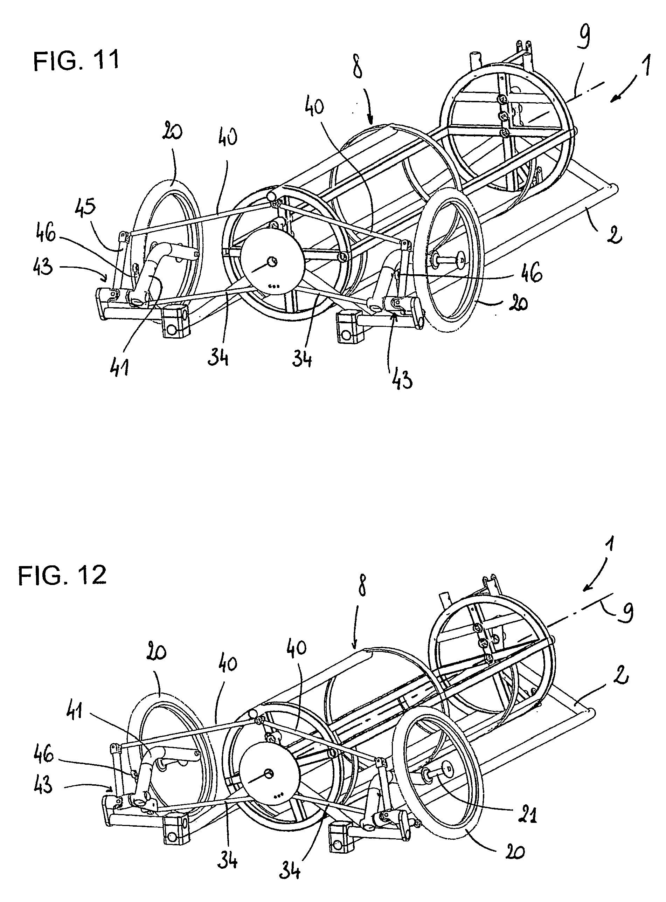

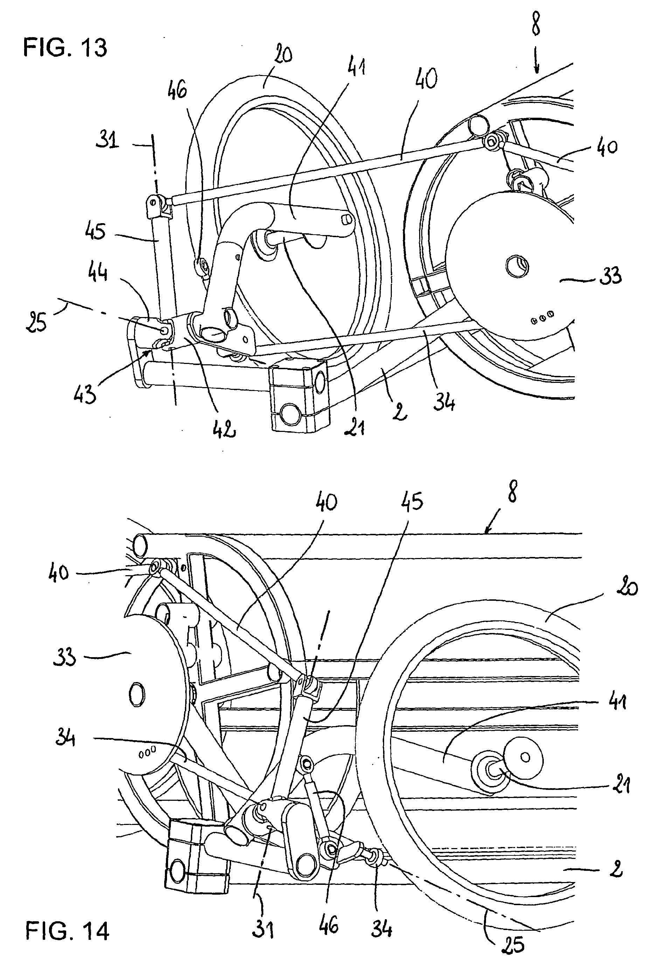

On se rapporte à présent aux figures 11 à 14 qui illustrent un véhicule 1 selon un deuxième mode de réalisation de l'invention.

Le véhicule 1 est globalement identique à celui décrit précédemment, à l'exception des points suivants.

Le bras 23 est remplacé par un porte-roue 41, formant une pièce coudée située entre la roue 20 et le châssis 2, dont une extrémité est liée au moyeu 21 de la roue 20, et dont l'autre extrémité porte de manière fixe la première fourche 42 d'un cardan 43. L'autre fourche 44 du cardan 43 est solidaire du châssis 2. Le cardan 43 définit deux axes, qui constituent l'axe d'inclinaison 25 et l'axe de direction 31.

La biellette de direction 34 est associée au cardan 43 de sorte que son extrémité soit située sur l'axe d'inclinaison 25, tandis que la biellette d'inclinaison 40 est associée au cardan 43, par l'intermédiaire d'une pièce 45, de sorte que son extrémité soit située sur l'axe de direction 31. Cette disposition permet d'obtenir un pivotement autour des axes d'inclinaison 25 et de direction 31 indépendamment ou simultanément.

Par ailleurs, une biellette de réglage 46 est prévue entre le cardan 43 et le porte-roue 41, afin de permettre d'orienter l'axe d'inclinaison 25 de sorte qu'il intersecte le sol sensiblement au point d'intersection P entre la roue 20 et le sol, ou légèrement en dessous. L'ajustement de cette géométrie vise à éviter que la réaction du sol ne crée un moment d'inclinaison inverse à celui recherché.

Il est à noter que le pivotement simultané sur les deux axes 25, 31 se traduit par une réduction de la garde au sol en virage, ce qui est préjudiciable à l'autostabilité du véhicule. Cet inconvénient pourrait être corrigé en donnant une liberté de rotation, selon un axe horizontal transversal, à la fourche 44 du cardan 43 solidaire du châssis 2, et en maîtrisant la rotation sur ce troisième axe par une biellette ou un moyen de suspension.

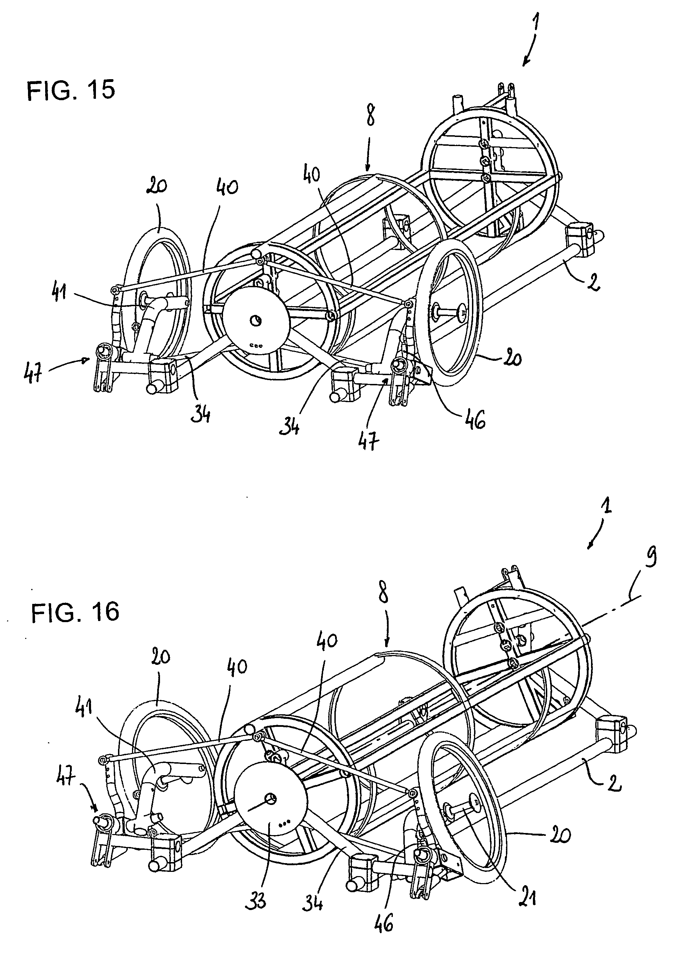

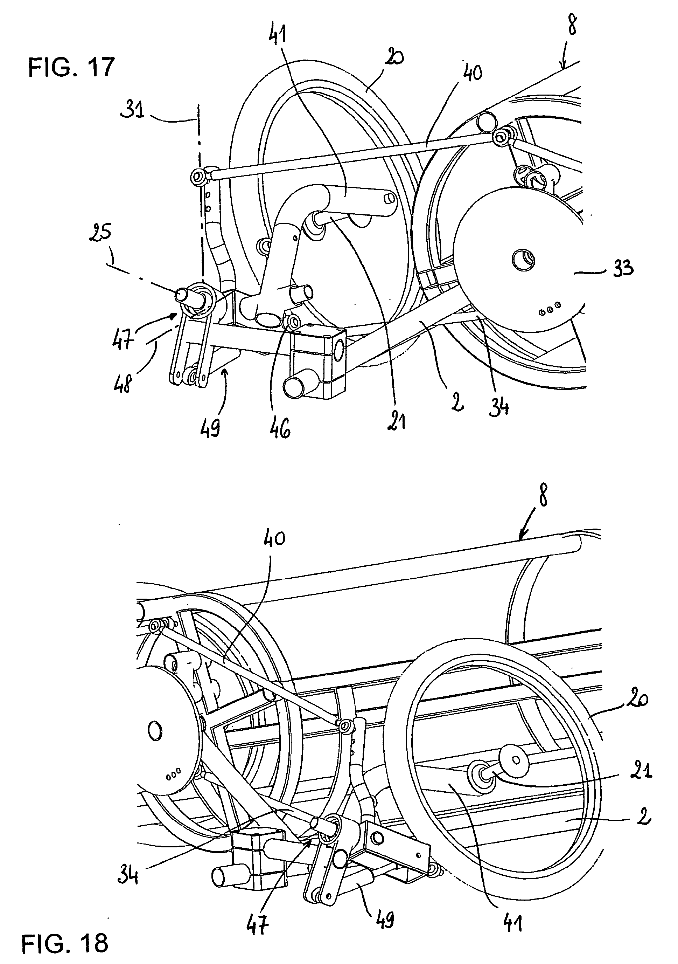

Enfin, on se rapporte aux figures 15 à 18 qui illustrent un véhicule 1 selon un troisième mode de réalisation de l'invention, relativement proche du deuxième mode de réalisation en ce que les axes d'inclinaison 25 et de direction 31 sont sécants et situés dans un plan sensiblement parallèle à la roue 20.

Le cardan est ici remplacé par une rotule 47 définissant les axes d'inclinaison 25 et de direction 31 et, éventuellement, un troisième axe 48 de suspension. La totale liberté de rotation de la rotule 47 par elle-même est bridée par la biellette de direction 34, la biellette d'inclinaison 40, et le système de suspension 49. Les mouvements selon ces trois axes 25, 31, 48 peuvent être dissociés ou simultanés.

Là encore, le point de fixation de la biellette de direction 34 est situé sur l'axe d'inclinaison 25 et le point de fixation de la biellette d'inclinaison 40 est situé sur l'axe de direction 31.

L'avantage de ce mode de la rotule par rapport au cardan est que les mouvements simultanés selon les axes d'inclinaison 25 et de direction 31 ne modifient pas la garde au sol, car le contrôle du troisième axe 48 (par une biellette ou un moyen de suspension) modifie légèrement dans l'espace l'orientation des axes d'inclinaison 25 et de direction 31.

On retrouve également la biellette de réglage 46 qui permet d'ajuster la géométrie de l'ensemble de sorte que l'axe d'inclinaison 25 intersecte le sol sensiblement au point d'intersection P entre la roue 20 et le sol, ou légèrement en dessous. A cet effet, la biellette 46 permet de faire varier la hauteur de la roue 20 par rapport au châssis 2.

Concernant les deuxième et troisième modes de réalisation, une seule roue 20 a été décrite. L'autre roue du même train est symétrique par rapport au plan longitudinal médian du véhicule 1. Par ailleurs, de préférence, chaque cardan 43 ou rotule 47 est situé en avant du point de contact P entre la roue 20 correspondante et le sol, que ce soit dans le train avant ou dans le train arrière. Les roues sont donc tirées, ce qui est un facteur d'autostabilité (retour automatique au braquage nul). Ainsi, le train arrière n'est pas symétrique du train avant par rapport au plan transversal médian du véhicule 1, mais il est identique au train avant. Ceci permet que l'effet de la réaction du sol soit compensé entre le train avant et le train arrière et, en conséquence, de ne pas durcir la direction. Du fait de cette géométrie à quatre roues tirées, le braquage génère un déplacement des quatre roues 20 vers l'extérieur du virage par rapport au châssis 2, ce qui améliore la stabilité et la répartition des appuis sur les quatre roues.

Une disposition symétrique des trains avant et arrière serait toutefois possible, de préférence en combinaison avec un système de direction assistée pour pallier le problème précité.

Comme indiqué précédemment, l'invention peut s'appliquer à un véhicule motorisé. Afin de simplifier les moyens de transmission, on préférera à une motorisation traditionnelle un système comportant une motorisation par roue, fixé sur le porte-roue 41 aussi proche que possible du point d'articulation (intersection des axes 25 et 31). Le moteur ainsi suspendu pivote avec la roue 20 et la transmission peut être réalisée facilement au moyen d'une chaîne ou d'une courroie. Une motorisation électrique est particulièrement adaptée, car les moteurs sont compacts, et les batteries peuvent constituer un balourd intéressant lorsqu'elle sont disposées au fond de l'habitacle 8 pivotant.

Il va de soi que l'invention n'est pas limitée à la forme de réalisation décrite ci-dessus à titre d'exemple mais qu'elle en embrasse au contraire toutes les variantes de réalisation.

## Revendications

1. Véhicule comprenant :
- un châssis (2) ;
- au moins un train de roue avant et un train de roue arrière, l'un des deux trains comprenant au moins deux roues (20) et l'autre au moins une roue (20), la ou les roues (20) d'au moins l'un des trains étant directrices, chacune des roues directrices étant montée sur le châssis (2) par l'intermédiaire d'un premier pivot, dit pivot de direction (30), pour pouvoir être braquée ;
- un habitacle (8) destiné à recevoir le conducteur et les passagers du véhicule ;
- un volant de direction monté sur l'habitacle (8), apte à provoquer le braquage des roues (20) directrices par l'intermédiaire de moyens de transmission (18, 33, 34) ;
- où l'habitacle (8) est monté pivotant par rapport au châssis (2) autour d'un axe longitudinal (9) situé sensiblement dans le plan longitudinal médian du véhicule (1), au-dessus du centre de gravité de l'habitacle (8) ;
- où chacune des roues (20) est montée sur le châssis (2) par l'intermédiaire d'un deuxième pivot, dit pivot d'inclinaison (24), l'axe (25) dudit pivot d'inclinaison (24) s'étendant dans un plan sensiblement parallèle au plan longitudinal médian du véhicule (1) ;
- où la géométrie du véhicule (1) et/ou des moyens mécaniques associant l'habitacle (8) et les roues (20) sont aptes à provoquer, lorsque le véhicule (1) circule dans un virage, un pivotement de l'habitacle (8) et une inclinaison de chacune des roues (20) vers l'intérieur du virage, sous l'effet de la force centrifuge, le châssis (2) restant sensiblement parallèle au sol ;
**caractérisé par** l'axe (25) dudit pivot d'inclinaison (24) qui est incliné vers le bas d'un angle (α) compris entre 5 et 45°, par rapport à l'axe longitudinal (9) du véhicule (1), lorsque l'on se rapproche du point de contact (P) entre la roue (20) et le sol (26).

2. Véhicule selon la revendication 1, **caractérisé en ce que** chacune des roues (20) est reliée à l'habitacle (8) par une biellette d'inclinaison (40) agencée pour que le pivotement de l'habitacle (8) entraîne l'inclinaison des roues (20), et **en ce que** le pivot d'inclinaison (24) d'une roue (20) est disposé de sorte que le point d'intersection entre son axe (25) et le sol (26) soit sensiblement confondu avec le point de contact (P) entre ladite roue (20) et le sol (26).

3. Véhicule selon la revendication 1, **caractérisé en ce que** le pivot d'inclinaison (24) d'une roue (20) est disposé de sorte que le point d'intersection entre son axe (25) et la perpendiculaire au sol (26) passant par le point de contact (P) entre ladite roue (20) et le sol (26) soit situé sous ledit point de contact (P) entre la roue (20) et le sol (26).

4. Véhicule selon la revendication 3, **caractérisé en ce que** chacune des roues (20) est reliée à l'habitacle (8) par une biellette d'inclinaison (40) apte à transmettre l'inclinaison des roues (20) à l'habitacle (8).

5. Véhicule selon la revendication 2 ou 4, **caractérisé en ce que** le pivot d'inclinaison (24) est situé à l'extérieur de l'empattement et **en ce que** la longueur et la position des biellettes d'inclinaison (40) sont prévues pour que le sous-braquage induit par l'inclinaison du pivot d'inclinaison (24) par rapport à l'axe longitudinal (9) du véhicule (1) soit sensiblement exactement compensé par le sur-braquage induit par le pivotement de l'habitacle (8).

6. Véhicule selon la revendication 2 ou 4, **caractérisé en ce que** le pivot d'inclinaison (24) est situé à l'intérieur de l'empattement et **en ce que** la longueur et la position des biellettes d'inclinaison (40) sont prévues pour que le sur-braquage induit par l'inclinaison du pivot d'inclinaison (24) par rapport à l'axe longitudinal (9) du véhicule (1) soit sensiblement exactement compensé par le sous-braquage induit par le pivotement de l'habitacle (8)

7. Véhicule selon l'une des revendications 1 à 6, **caractérisé en ce que** les pivots de direction (30) et d'inclinaison (24) sont disposés successivement entre le châssis (2) et le moyeu (21) de chacune des roues (20) directrices, lesdits pivots (30, 24) étant reliés par un bras (23) auquel sont associés les moyens de transmission (18, 33, 34).

8. Véhicule selon la revendication 7, **caractérisé en ce que** le pivot de direction (30) est situé entre le pivot d'inclinaison (24) et le châssis (2).

9. Véhicule selon la revendication 7, **caractérisé en ce que** le pivot d'inclinaison (24) est situé entre le pivot de direction (30) et le châssis (2).

10. Véhicule selon l'une des revendications 1 à 6, **caractérisé en ce que** les pivots de direction (30) et d'inclinaison (24) sont disposés de sorte que leurs axes (31, 25) soient situés sensiblement dans le plan de la roue (20).

11. Véhicule selon la revendication 10, **caractérisé en ce qu'**au moins une roue (20) est associée au châssis (2) au moyen d'un cardan (43) ou d'une rotule (47), ledit cardan (43) ou ladite rotule (47) définissant les axes (31, 25) des pivots de direction (30) et d'inclinaison (24).

12. Véhicule selon l'une des revendications 1 à 11, **caractérisé en ce que** l'angle (α) d'inclinaison de l'axe (25) du pivot d'inclinaison (24) est compris entre 15 et 30°.

13. Véhicule selon l'une des revendications 1 à 12, **caractérisé en ce que** l'axe (31) du pivot de direction (30) s'étend dans un plan sensiblement transversal au véhicule (1) en étant incliné vers le haut, de la roue (20) vers le châssis (2), d'un angle (β) compris entre 10 et 30°.

14. Véhicule selon l'une des revendications 1 à 13, **caractérisé en ce que** les moyens de transmission comprennent une colonne de direction dont l'extrémité arrière porte le volant et dont l'extrémité avant est associée, par l'intermédiaire de moyens démultiplicateurs (18, 33), à deux biellettes de direction (34), chacune des biellettes de direction (34) étant reliée à une roue (20) directrice d'un même train de roues, avant ou arrière.

15. Véhicule selon l'une des revendications 1 à 14, **caractérisé en ce que** les moyens démultiplicateurs comprennent une couronne dentée (33) reliée à l'extrémité avant de la colonne de direction par une chaîne (18).

16. Véhicule selon l'une des revendications 1 à 15, **caractérisé en ce que** toutes les roues (20) sont directrices, et **en ce que** le véhicule (1) comprend un arbre longitudinal, monté sur l'habitacle (8), apte à transmettre la commande fournie par le volant d'un premier train de roues à un deuxième train de roues.

17. Véhicule selon l'une des revendications 1 à 16, **caractérisé en ce que** le train de roues arrière est symétrique du train de roues avant par rapport au plan transversal médian du véhicule (1).

18. Véhicule selon l'une des revendications 1 à 17, **caractérisé en ce que** l'habitacle (8) est cylindrique.

19. Véhicule selon l'une des revendications 1 à 18, **caractérisé en ce que** l'axe longitudinal de rotation (9) de l'habitacle (8) passe par le centre géométrique de l'habitacle (8).

20. Véhicule selon l'une des revendications 1 à 19, **caractérisé en ce que** le châssis (2) est placé à l'extérieur de l'habitacle (8).

## Claims

1. A vehicle, comprising:
- a frame (2);
- at least one front wheel train and one rear wheel train, one of both trains comprising at least two wheels (20) and the other one at least one wheel (20), the wheel(s) (20) of at least one of the trains being leading wheels, each of the leading wheels being mounted on the frame (2) via a first pin, a so-called steering pin (30), so as to be rotatable;
- a passenger compartment (8) for receiving the driver and the passengers of the vehicle;
- a steering wheel mounted at the passenger compartment (8), capable of making the leading wheels (20) turn via a transmission means (18, 33, 34);
- wherein the passenger compartment (8) is mounted pivotingly with respect to the frame (2) around a longitudinal axis (9) situated substantially in the central longitudinal plane of the vehicle (1), above the center of gravity of the passenger compartment (8);
- wherein each of the wheels (20) is mounted on the frame (2) via a second pin, a so-called inclination pin (24), the axis (25) of said inclination pin (24) extending in a plane substantially parallel to the central longitudinal plane of the vehicle (1);
- wherein the geometry of the vehicle (1) and/or the mechanical means combining the passenger compartment (8) and the wheels (20) is capable of causing, when the vehicle (1) is negotiating a bend, a pivoting motion of the passenger compartment (8) and an inclination of each of the wheels (20) towards the inside of the bend, under the effect of centrifugal force, the frame (2) remaining substantially parallel to the ground,
**characterized by** the axis (25) of said inclination pin (24), which is inclined downwards at an angle (α) between 5 and 45° with respect to the longitudinal axis (9) of the vehicle (1) when approaching the contact point (P) between the wheel (20) and the ground (26).

2. The vehicle according to claim 1, **characterized in that** each of the wheels (20) is linked to the passenger compartment (8) by a inclination link (40) arranged so that the pivoting motion of the passenger compartment (8) results in the inclination of the wheels (20), and that the inclination pin (24) of a wheel (20) is arranged so that the point of intersection between the axis (25) thereof and the ground (26) substantially coincides with the contact point (P) between said wheel (20) and the ground (26).

3. The vehicle according to claim 1, **characterized in that** the inclination pin (24) of a wheel (20) is arranged so that the point of intersection between the axis (25) thereof and the normal to the ground (26) passing through the contact point (P) between said wheel (20) and the ground (26) is situated under said contact point (P) between the wheel (20) and the ground (26).

4. The vehicle according to claim 3, **characterized in that** each of the wheels (20) is linked to the passenger compartment (8) by an inclination link (40) capable of transmitting the inclination of the wheels (20) to the passenger compartment (8).

5. The vehicle according to claim 2 or 4, **characterized in that** the inclination pin (24) is situated outside the wheelbase, and that the length and the position of the inclination links (40) are provided so that the under-steering induced by the inclination of the inclination pin (24) with respect to the longitudinal axis (9) of the vehicle (1) is substantially exactly compensated by the over-steering induced by the pivoting motion of the passenger compartment (8).

6. The vehicle according to claim 2 or 4, **characterized in that** the inclination pin (24) is situated inside the wheelbase, and that the length and the position of the inclination links (40) are provided so that the over-steering induced by the inclination of the inclination pin (24) with respect to the longitudinal axis (9) of the vehicle (1) is substantially exactly compensated by the under-steering induced by the pivoting motion of the passenger compartment (8).

7. The vehicle according to any of claims 1 to 6, **characterized in that** the steering (30) and inclination (24) pins are arranged in sequence between the frame (2) and the hub (21) of each of the leading wheels (20), said pins (30, 24) being linked by an arm (23), which the transmission means (18, 33, 34) is associated with.

8. The vehicle according to claim 7, **characterized in that** the steering pin (30) is situated between the inclination pin (24) and the frame (2).

9. The vehicle according to claim 7, **characterized in that** the inclination pin (24) is situated between the steering pin (30) and the frame (2).

10. The vehicle according to any of claims 1 to 6, **characterized in that** the steering (30) and inclination (24) pins are arranged so that the axes (31, 25) thereof are situated substantially in the plane of the wheel (20).

11. The vehicle according to claim 10, **characterized in that** at least one wheel (20) is associated with the frame (2) by means of a universal joint (43) or a ball joint (47), said universal joint (43) or said ball joint (47) defining the axes (31, 25) of the steering (30) and inclination (24) pins.

12. The vehicle according to any of claims 1 to 11, **characterized in that** the inclination angle (α) of the axis (25) of the inclination pin (24) is between 15 and 30°.

13. The vehicle according to any of claims 1 to 12, **characterized in that** the axis (31) of the steering pin (30) extends in a plane, which is substantially transversal to the vehicle (1), while being inclined to the upper part, of the wheel (20) towards the frame (2), at an angle (β) between 10 and 30°.

14. The vehicle according to any of claims 1 to 13, **characterized in that** the transmission means comprises a steering column the rear end of which carries the steering wheel and the front end of which is associated, via reduction means (18, 33), with two steering links (34), each of the steering links (34) being linked to a leading wheel (20) of the same wheel train, front or rear.

15. The vehicle according to any of claims 1 to 14, **characterized in that** the reduction means comprises a ring gear (33) linked to the front end of the steering column by a chain (18).

16. The vehicle according to any of claims 1 to 15, **characterized in that** all of the wheels (20) are leading wheels, and that the vehicle (1) comprises a longitudinal shaft, mounted at the passenger compartment (8), capable of transmitting the control provided by the steering wheel of a first wheel train to a second wheel train.

17. The vehicle according to any of claims 1 to 16, **characterized in that** the rear wheel train is symmetrical to the front wheel train with respect to the central transversal plane of the vehicle (1).

18. The vehicle according to any of claims 1 to 17, **characterized in that** the passenger compartment (8) is cylindrical.

19. The vehicle according to any of claims 1 to 18, **characterized in that** the longitudinal rotational axis (9) of the passenger compartment (8) passes through the geometrical center of the passenger compartment (8).

20. The vehicle according to any of claims 1 to 19, **characterized in that** the frame (2) is placed outside the passenger compartment (8).

## Patentansprüche

1. Fahrzeug, umfassend:
- ein Fahrgestell (2);
- mindestens einen Vorderachssatz und einen Hinterachssatz, wobei einer der beiden Sätze mindestens zwei Räder (20) und der andere mindestens ein Rad (20) umfasst, wobei das Rad bzw. die Räder (20) mindestens eines der Sätze ein Leitrad bzw. Leiträder sind, wobei jedes der Leiträder am Fahrgestell (2) über einen ersten Zapfen, einen so genannten Lenkzapfen (30), angebracht ist, so dass es einschlagen kann;
- ein Karosseriegehäuse (8), um den Fahrer und die Fahrgäste des Fahrzeugs aufzunehmen;
- ein Lenkrad, das an dem Karosseriegehäuse (8) angebracht ist und in der Lage ist, das Einschlagen der Leiträder (20) durch Übertragungsmittel (18, 33, 34) hervorzurufen;
- wobei das Karosseriegehäuse (8) zum Fahrgestell (2) um eine Längsachse (9) drehbar angebracht ist, die im Wesentlichen in der mittleren Längsebene des Fahrzeugs (1) über dem Schwerpunkt des Karosseriegehäuses (8) liegt;
- wobei jedes der Räder (20) an dem Fahrgestell (2) über einen zweiten Zapfen, einen so genannten Neigungszapfen (24), angebracht ist, wobei sich die Achse (25) des Neigungszapfens (24) in einer Ebene im Wesentlichen parallel zur mittleren Längsebene des Fahrzeugs (1) erstreckt;
- wobei die Geometrie des Fahrzeugs (1) und/oder der mechanischen Mittel, die das Karosseriegehäuse (8) mit den Rädern (20) verknüpfen, in der Lage ist, wenn das Fahrzeug (1) eine Kurve fährt, eine Schwenkbewegung des Karosseriegehäuses (8) und eine Neigung jedes Rades (20) zum Innern der Kurve hin durch Einwirkung von Schleuderkraft hervorzurufen, wobei das Fahrgestell (2) im Wesentlichen parallel zum Boden bleibt,
**gekennzeichnet durch** die Achse (25) des Neigungszapfens (24), die in einem Winkel (α) zwischen 5 und 45° im Verhältnis zur Längsachse (9) des Fahrzeugs (1) nach unten geneigt ist, wenn man sich dem Kontaktpunkt (P) zwischen dem Rad (20) und dem Boden (26) nähert.

2. Fahrzeug nach Anspruch 1, **dadurch gekennzeichnet, dass** jedes der Räder (20) mit dem Karosseriegehäuse (8) über eine Neigungspleuelstange (40) verbunden ist, die derart angeordnet ist, dass die Schwenkbewegung des Karosseriegehäuses (8) zur Neigung der Räder (20) führt, und dass der Neigungszapfen (24) eines Rads (20) derart angeordnet ist, dass der Schnittpunkt zwischen seiner Achse (25) und dem Boden (26) im Wesentlichen in den Kontaktpunkt (P) zwischen dem Rad (20) und dem Boden (26) übergeht.

3. Fahrzeug nach Anspruch 1, **dadurch gekennzeichnet, dass** der Neigungszapfen (24) eines Rads (20) derart angeordnet ist, dass der Schnittpunkt zwischen seiner Achse (25) und der Senkrechten zum Boden (26) durch den Kontaktpunkt (P) zwischen dem Rad (20) und dem Boden (26) geht, der sich unter dem Kontaktpunkt (P) zwischen dem Rad (20) und dem Boden (26) befindet.

4. Fahrzeug nach Anspruch 3, **dadurch gekennzeichnet, dass** jedes der Räder (20) mit dem Karosseriegehäuse (8) über eine Neigungspleuelstange (40) verbunden ist, die in der Lage ist, die Neigung der Räder (20) an das Karosseriegehäuse (8) zu übertragen.

5. Fahrzeug nach Anspruch 2 oder 4, **dadurch gekennzeichnet, dass** der Neigungszapfen (24) sich außerhalb des Radsatzes befindet, und dass die Länge und die Position der Neigungspleuelstange (40) derart bereitgestellt werden, dass ein Unterlenken, das durch die Neigung des Neigungszapfens (24) im Verhältnis zur Längsachse (9) des Fahrzeugs (1) bewirkt wird, im Wesentlichen genau durch das Übersteuern ausgeglichen wird, das durch die Schwenkbewegung des Karosseriegehäuses (8) bewirkt wird.

6. Fahrzeug nach Anspruch 2 oder 4, **dadurch gekennzeichnet, dass** der Neigungszapfen (24) sich innerhalb des Radsatzes befindet, und dass die Länge und die Position der Neigungspleuelstange (40) derart bereitgestellt werden, dass das Überlenken, das durch die Neigung des Neigungszapfens (24) im Verhältnis zur Längsachse (9) des Fahrzeugs (1) bewirkt wird, im Wesentlichen genau durch das Unterlenken ausgeglichen wird, das durch die Schwenkbewegung des Karosseriegehäuses (8) bewirkt wird.

7. Fahrzeug nach einem der Ansprüche 1 bis 6, **dadurch gekennzeichnet, dass** der Lenkzapfen (30) und der Neigungszapfen (24) nacheinander zwischen dem Fahrgestell (2) und der Nabe (21) eines jeden Leitrads (20) angeordnet sind, wobei die Zapfen (30, 24) durch einen Arm (23) verbunden werden, mit dem die Übertragungsmittel (18, 33, 34) verknüpft sind.

8. Fahrzeug nach Anspruch 7, **dadurch gekennzeichnet, dass** der Lenkzapfen (30) sich zwischen dem Neigungszapfen (24) und dem Fahrgestell (2) befindet.

9. Fahrzeug nach Anspruch 7, **dadurch gekennzeichnet, dass** der Neigungszapfen (24) sich zwischen dem Lenkzapfen (30) und dem Fahrgestell (2) befindet.

10. Fahrzeug nach einem der Ansprüche 1 bis 6, **dadurch gekennzeichnet, dass** der Lenkzapfen (30) und der Neigungszapfen (24) derart angeordnet sind, dass ihre Achsen (31, 25) sich im Wesentlichen in der Ebene des Rads (20) befinden.

11. Fahrzeug nach Anspruch 10, **dadurch gekennzeichnet, dass** mindestens ein Rad (20) mit dem Fahrgestell (2) mittels eines Kardangelenks (43) oder eines Kugelgelenks (47) verknüpft ist, wobei das Kardangelenk (43) oder das Kugelgelenk (47) die Achsen (31, 25) des Lenkzapfens (30) und des Neigungszapfens (24) bestimmt.

12. Fahrzeug nach einem der Ansprüche 1 bis 11, **dadurch gekennzeichnet, dass** der Neigungswinkel (α) der Achse (25) des Neigungszapfens (24) zwischen 15 und 30° liegt.

13. Fahrzeug nach einem der Ansprüche 1 bis 12, **dadurch gekennzeichnet, dass** die Achse (31) des Lenkzapfens (30) sich in einer Ebene erstreckt, die im Wesentlichen zum Fahrzeug (1) quer liegt und dabei zum oberen Teil des Rads (20) zum Fahrgestell (2) hin in einem Winkel (β) zwischen 10 und 30° geneigt ist.

14. Fahrzeug nach einem der Ansprüche 1 bis 13, **dadurch gekennzeichnet, dass** die Übertragungsmittel eine Lenksäule umfassen, deren Hinterende das Lenkrad trägt und deren Vorderende über Untersetzungsmittel (18, 33), mit zwei Lenkpleuelstangen (34) verknüpft sind, wobei jede der Lenkpleuelstangen (34) mit einem Leitrad (20) des gleichen Vorder- oder Hinterachssatz verbunden ist.

15. Fahrzeug nach einem der Ansprüche 1 bis 14, **dadurch gekennzeichnet, dass** die Untersetzungsmittel einen Zahnring (33) umfassen, der mit dem Vorderende der Lenksäule durch eine Kette (18) verbunden ist.

16. Fahrzeug nach einem der Ansprüche 1 bis 15, **dadurch gekennzeichnet, dass** alle Räder (20) Leiträder sind, und dass das Fahrzeug (1) eine Längswelle umfasst, die am Karosseriegehäuse (8) angebracht und in der Lage ist, die Steuerung, die das Lenkrad einem ersten Achssatz bereitstellt, auf einen zweiten Achssatz zu übertragen.

17. Fahrzeug nach einem der Ansprüche 1 bis 16, **dadurch gekennzeichnet, dass** der Hinterachssatz mit dem Vorderachssatz im Verhältnis zur mittleren Querebene des Fahrzeugs (1) symmetrisch ist.

18. Fahrzeug nach einem der Ansprüche 1 bis 17, **dadurch gekennzeichnet, dass** das Karosseriegehäuse (8) zylinderförmig ist.

19. Fahrzeug nach einem der Ansprüche 1 bis 18, **dadurch gekennzeichnet, dass** die Längsdrehachse (9) des Karosseriegehäuses (8) durch den geometrischen Mittelpunkt des Karosseriegehäuses (8) geht.

20. Fahrzeug nach einem der Ansprüche 1 bis 19, **dadurch gekennzeichnet, dass** das Fahrgestell (2) außerhalb des Karosseriegehäuses (8) angeordnet ist.
